# EUROPEAN PATENT APPLICATION

(11) **EP 4 838 881 A1**
(43) Date of publication of application: **11.11.2026**
(21) Application number: 24915685.2
(22) Date of filing: 06.12.2024
(51) Int. Cl.: H04N 19/103, H04N 19/12, H04N 19/136, H04N 19/174

(54) **VIDEO ENCODING DEVICE, VIDEO DECODING DEVICE, VIDEO ENCODING METHOD, AND VIDEO DECODING METHOD**

(30) Priority: 05.01.2024 JP 2024000581; 08.03.2024 JP 2024035448
(71) Applicant: NEC Corporation, 108-8001 Tokyo (JP)
(72) Inventor: CHONO Keiichi, Tokyo 108-8001 (JP); IIDA Kenta, Tokyo 108-8001 (JP); TOKUMITSU Kenta, Tokyo 108-8001 (JP); MORIYOSHI Tatsuji, Tokyo 108-8001 (JP)
(74) Representative: Betten & Resch
(86) International application number: PCT/JP2024/043155
(87) International publication number: WO 2025/146762

(57) **Abstract**

When combining video encoding based on predictive encoding in a coding unit with video encoding based on a neural network, in order to ensure interoperability between a video encoding device and a video decoding device, the video encoding device executes video encoding using a first video encoding method based on a neural network, and video encoding based on a second video encoding method using predictive encoding in a coding unit, and includes constraint unit which imposes a constraint on a encoding process of a picture encoded by the first video encoding method.

## Description

### Technical Field

The present disclosure relates to a video encoding device, a video decoding device, a video encoding method, and a video decoding method.

### Background Art

In order to efficiently transmit or record a video, a video encoding device which generates an encoded expression (hereinafter, referred to as a bitstream) obtained by encoding an input video and a video decoding device which decodes a bitstream to generate a decoded video are used.

### [Video encoding Based on Predictive Coding in Coding Unit]

Examples of video encoding system standards include H.264/AVC (Advanced Video Coding), H.265/HEVC (High-Efficiency Video Coding), and H.266/VVC (Versatile Video Coding), which are standardized by ITU-T SG16 and ISO/IEC/SC29 (for example, refer to NPL 1).

In these video encoding systems, video data is managed in a hierarchical structure, and is encoded and decoded. The hierarchical structure includes, for example, a picture constituting video data, a slice obtained by partitioning (dividing) the picture, a coding tree unit (CTU) obtained by partitioning the slice, and a coding unit (CU) obtained by partitioning the coding tree unit.

In these video encoding methods, a tile, a slice, and a sub-picture are defined as a unit for partitioning pictures. A picture is partitioned into one or more tiles. A tile is a rectangular region composed of CTUs. A slice is a rectangular region composed of tiles. The slice scanning orders are Raster-Scan Slice mode and Rectangular Slice mode. Raster-Scan Slice mode is a mode in which slices are arranged in raster scan order. Rectangular-Slice mode is a mode in which the coverage area of a slice is a rectangular region defined by a tile or by CTU lines within a tile. A subpicture consists of one or more slices.

An input image of a CU to be processed is usually encoded in the past with respect to the CU to be processed, and is predictively coded based on a prediction image generated based on a decoded image decoded. That is, the prediction error image obtained by subtracting the prediction image from the input image is encoded and decoded. Predictive coding includes intra-screen prediction (intra prediction) using a decoded image included in a picture at the same display time as that of the CU to be processed and inter-screen prediction (inter prediction) using a decoded image included in a picture at a display time different from that of the CU to be processed.

The prediction error image is encoded based on frequency transform, quantization, and entropy coding. The prediction error image is decoded based on entropy decoding, inverse quantization, and inverse frequency transform. The frequency transform value of the quantized prediction error image is referred to as a quantized value.

### [Video encoding Based on Neural Network]

NPL 2 discloses a new video encoding technique combining an auto-encoder, quantization, and entropy coding, which are one of neural networks.

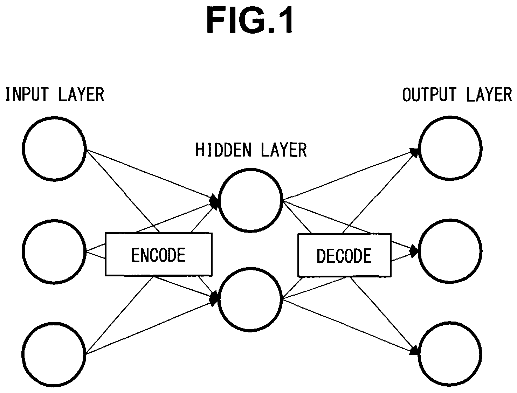

The auto-encoder compresses input data into a low-dimensional feature amount vector so as to include only important features. Thereafter, the auto-encoder generates reconstructed data obtained by reconstructing the low-dimensional feature amount vector to the original dimension. Fig. 1 is an explanatory diagram showing an algorithm of an auto-encoder. In Fig. 1, a circular portion is referred to as a node, and an arrow is referred to as an edge. The processing of dropping into a low-dimensional feature amount vector (first half portion) is referred to as encoding. The processing of generating reconstructed data (latter half portion) is called decoding.

The learning of the auto-encoder proceeds so as to minimize the reconstruction error (the difference between the input data and the reconstructed data). In order to obtain meaningful feature amounts, the auto-encoder is designed to impose constraints to the structure of the encoding or to add regularization terms to the loss function of the network.

### Citation List

### Non Patent Literature

NPL 1: Recommendation ITU-T H.266 "Versatile Video Coding", Telecommunication Standardization Sector of ITU, August 2020
NPL 2: J. Ball'e, V. Laparra, and E.P. Simoncelli, "End-to-end Optimized Image Compression," published as a conference paper at ICLR 2017

### Summary of Invention

### Technical Problem

It is conceivable to design a video encoding device capable of performing both video encoding using a video encoding method based on predictive encoding in a coding unit (predictive coding processing on a coding unit basis) and video encoding using a video encoding method based on a neural network, and a video decoding device capable of performing both video decoding using a video decoding method based on predictive decoding in a coding unit and video decoding using a video decoding method based on a neural network.

In a system comprising such a video encoding device and a video decoding device, there is a possibility that interoperability between the video encoding device and the video decoding device may not be guaranteed. It should be noted that the fact that encoding and decoding can be performed using both the video encoding system based on predictive encoding in a coding unit and the video encoding system based on a neural network can be achieved by combining video encoding based on predictive encoding in a coding unit with video encoding based on a neural network.

One example is a problem arising from a difference in the maximum code amount (the maximum value of code amount generated from a single picture by the encoding process) of a single picture. Specifically, there is a possibility that the maximum code amount when encoding is performed using a video encoding method based on predictive encoding will differ significantly from the maximum code amount when encoding is performed using a video encoding method based on a neural network. When the maximum code amounts of the two methods differ significantly, it is expected that excessive performance will be required of the video decoding device. In such a case, if the performance of the video decoding device is insufficient, problems may arise, such as the inability to obtain a high-quality decoded video. This problem becomes particularly pronounced when the code amount is large during encoding using a video decoding method based on a neural network.

Another example involves a problem arising from slice partitioning of a single picture. When executing video encoding based on a neural network, if a specified minimum processing size (for example, 128x128) is required, and the partitioning allows for the generation of slices smaller than the minimum processing size, the video decoding device may be required to execute exceptional processing. In such cases as well, there is a possibility that interoperability between the video encoding device and the video decoding device will not be guaranteed.

An object of the present invention is to ensure interoperability between a video encoding device and a video decoding device when combining video encoding based on predictive encoding in a coding unit with video encoding based on a neural network.

### Solution to Problem

The video encoding device according to the present disclosure is a video encoding device which executes video encoding using a first video encoding method based on a neural network, and video encoding using a second video encoding method based on predictive encoding in a coding unit, and includes constraint means for imposing a constraint on an encoding process of a picture encoded by the first image encoding method.

The video decoding device according to the present disclosure is a video decoding device which executes video decoding using a first video encoding method based on a neural network, and video decoding using a second video encoding method based on predictive encoding in a coding unit, and includes bitstream decoding means for decoding a bitstream which is generated under the condition where a constraint is imposed on an encoding process of a picture encoded by the first image encoding method.

The video encoding method according to the present disclosure is a video encoding method which executes video encoding using a first video encoding method based on a neural network, and video encoding using a second video encoding method based on predictive encoding in a coding unit, and imposes a constraint on an encoding process of a picture encoded by the first image encoding method.

The video decoding method according to the present disclosure is a video decoding method which executes video decoding using a first video encoding method based on a neural network, and video decoding using a second video encoding method based on predictive encoding in a coding unit, and decodes a bitstream which is generated under the condition where a constraint is imposed on an encoding process of a picture encoded by the first image encoding method.

The video encoding program according to the present disclosure is a video encoding program causing a computer to execute video encoding using a first video encoding method based on a neural network, and video encoding using a second video encoding method based on predictive encoding in a coding unit, wherein the video encoding program causes the computer to execute imposing a constraint on an encoding process of a picture encoded by the first image encoding method.

The video decoding program according to the present disclosure is a video decoding program for causing a computer to execute video decoding using a first video encoding method based on a neural network, and video decoding using a second video encoding method based on predictive encoding in a coding unit, wherein the video decoding program causes the computer to execute decoding a bitstream which is generated under the condition where a constraint is imposed on an encoding process of a picture encoded by the first image encoding method.

### Advantageous Effects of Invention

According to the present invention, interoperability between a video encoding device and a video decoding device is ensured.

### Brief Description of Drawings

[Fig. 1] It depicts an explanatory diagram showing an algorithm of an auto-encoder.
[Fig. 2] It depicts a block diagram showing an example configuration of a video encoding device.
[Fig. 3] It depicts a block diagram showing an example configuration of a video decoding device.
[Fig. 4] It depicts an explanatory diagram showing an example of the relationship between the image size of an input picture and the size of the feature vector.
[Fig. 5] It depicts a flowchart showing an example of the operation of a video encoding device.
[Fig. 6] It depicts a flowchart showing an example of the operation of a video decoding device.
[Fig. 7] It depicts an explanatory diagram showing an example of slice partitioning.
[Fig. 8] It depicts an explanatory diagram showing an example of a non-rectangular slice.
[Fig. 9] It depicts an explanatory diagram showing an example of constraints for prohibiting slice partitioning of a picture.
[Fig. 10] It depicts a block diagram showing a configuration example of an encoder and a decoder.
[Fig. 11] It depicts a block diagram showing a configuration example of an information processing system.
[Fig. 12] It depicts a block diagram showing the main part of a video encoding device.
[Fig. 13] It depicts a block diagram showing the main part of a video decoding device.

### Example Embodiment

Hereinafter, example embodiments will be described with reference to the drawings.

### Example embodiment 1.

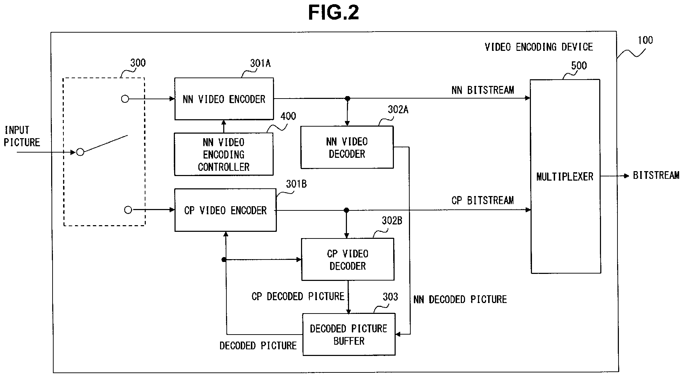

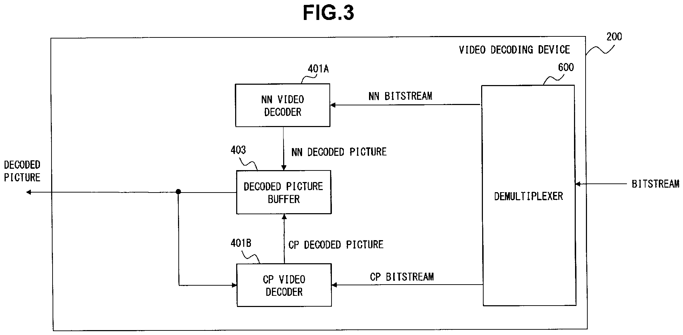

Fig. 2 is a block diagram showing an example configuration of a video encoding device. Fig. 3 is a block diagram showing an example configuration of a video decoding device.

The arrows in Figs. 2 and 3 simply indicate the direction of signal (data) flow, but do not preclude bidirectionality. This is also true for the other block diagrams.

The video encoding device 100 shown in Fig. 2 includes a switch 300, an NN video encoder 301A, an NN video decoder 302A, an NN video encoding controller 400, a CP video encoder 301B, a CP video decoder 302B, a decoded picture buffer 303, and a multiplexer 500 which performs multiplexing of entropy-encoded data and other information.

It should be noted that "NN" means neural network. "CP" means prediction based on a coding unit.

Hereinafter, the section of the video encoding device 100 which executes video encoding based on a neural network may be referred to as an NN video encoder. The section of the video encoding device 100 which executes video encoding based on predictive encoding may be referred to as a CP video encoder.

The video encoder 100 shown in Fig. 2 is a video encoder that combines an NN video encoder which performs video encoding based on a neural network, and a CP video encoder which performs video encoding based on predictive encoding in a coding unit.

The video decoding device 200 shown in Fig. 3 includes a demultiplexer 600 which performs demultiplexing a bitstream, an NN video decoder 401A, a CP video decoder 401B, and a decoded picture buffer 403.

Hereinafter, the section of the video decoding device 200 which executes video decoding based on a neural network may be referred to as an NN video decoder. The section of the video decoding device 200 which executes video decoding based on predictive encoding may be referred to as a CP video decoder.

The video decoding device 200 shown in Fig. 3 is a video decoding device that combines an NN video decoder which performs video decoding based on a neural network, and a CP video decoder which performs video decoding based on predictive decoding in a coding unit.

### [Description of Encoding Side]

In the video encoding device 100 shown in Fig. 2, the switch 300 supplies the input picture to either the NN video encoder 301A or the CP video encoder 301B.

The NN video encoder 301A includes, at least, an encoder, a quantizer, and an entropy encoder.

The encoder extracts features from the input picture. Specifically, the encoder obtains a feature vector from the input picture. The quantizer quantizes the feature vector supplied from the encoder to obtain quantized values. The entropy encoder entropy-encodes the quantized values to obtain entropy-encoded data. The entropy-encoded data from the entropy encoder is sometimes referred to as an NN bitstream.

The NN video decoder 302A includes, at least, an entropy decoder, an inverse quantizer, and a decoder. The entropy decoder entropy-decodes the NN bitstream to obtain quantized values. The inverse quantizer inverse-quantizes the quantized values to obtain a reconstructed feature vector. The decoder obtains a reconstructed image (NN decoded picture) from the reconstructed feature vector. Furthermore, for subsequent processing, the NN video decoder 302A stores the NN decoded picture in the decoded picture buffer 303.

The NN video encoding controller 400 appropriately constrains the NN video encoder 301A to ensure interoperability between the video encoding device 100 and the video decoding device 200.

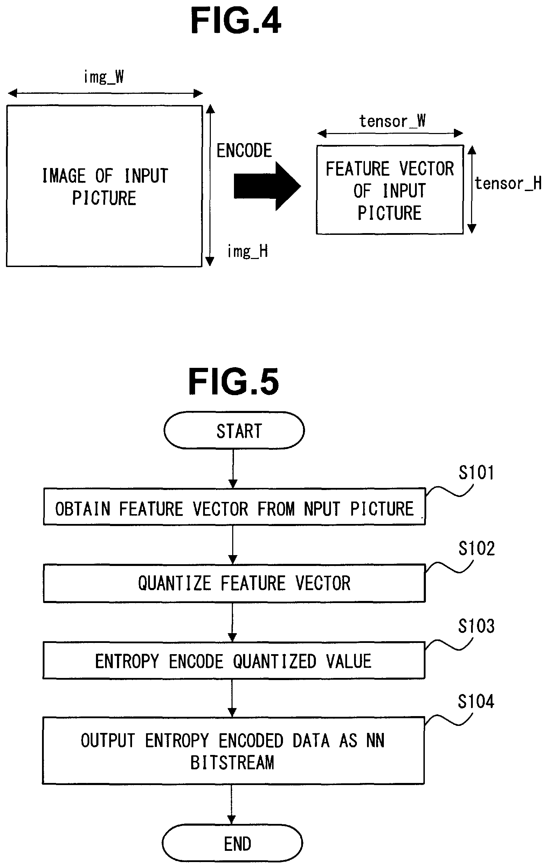

With reference to Fig. 4, an example of a constraint will be explained. One example of a constraint is a constraint regarding the maximum code amount (the maximum value of code amount generated from a single picture by the encoding process). Fig. 4 is an explanatory diagram showing an example of the relationship between the image size of an input picture and the size of the feature vector. The constraint described with reference to Fig. 4 is controlled by the NN video encoding controller 400 in the video encoding device 100.

The left side of Fig. 4 shows an example of an input picture. In Fig. 4, img_W indicates the width (horizontal size) of the input picture. img_H indicates the height (vertical size) of the input picture.

The right side of Fig. 4 shows an example of a feature vector obtained by encoding. In Fig. 4, tensor_W indicates the row size of the feature vector. tensor_H indicates the column size of the feature vector.

The NN video encoding controller 400 specifies the maximum code amount of a single input picture processed by the NN video encoder 301A based on the size of the feature vector (tensor_W x tensor_H), rather than the image size of the input picture (img_W x img_H). Specifically, for example, the maximum code amount is set to a number of bytes proportional to the value of (tensor_W x tensor_H) / MinCrBase. That is, the maximum code amount is constrained by the size of the feature vector (the dimension of the feature vector).

MinCrBase is described, for example, in Section A.4.2 "Profile-specific level limits" and Table A.2 of NPL 1. MinCrBase is a value related to the minimum compression ratio (MinCr: Minimum Compression Ratio).

It should be noted that the maximum code amount of a single input picture processed by the CP video encoder 301B is a number of bytes proportional to the value of (img_W x img_H) / MinCrBase, which is determined based on the image size of the input picture (img_W x img_H) and MinCrBase, as described in Section A.4.2 of Patent Document 1 ( ).

Since the encoder included in the NN video encoder 301A performs dimensionality reduction, specifying the maximum code amount based on img_W x img_H results in the compression ratio of the NN bitstream being set too low. Consequently, the processing performance required of the video decoder becomes too high. However, in this example embodiment, the NN video encoding controller 400 appropriately constrains the maximum code amount of pictures encoded using video encoding based on a neural network. Consequently, the processing performance required of the video decoder is prevented from becoming excessively high. As a result, interoperability between the video encoding device and the video decoding device is ensured.

The CP video encoder 301B performs video encoding processing using a video encoding method based on prediction encoding on a coding unit basis. The CP video decoder 302B performs decoding processing using a video decoding method based on prediction decoding on a coding unit basis. The decoded picture buffer 303 is a storage unit which stores decoded pictures (reconstructed pictures). A system complying with H.264/AVC, H.265/HEVC, H.266/VVC, or the like may be used as the video encoding system.

The CP video encoder 301B includes, at least, a predictor, a frequency transformer, a quantizer, and an entropy encoder.

The CP video encoder 301B performs video encoding based on predictive encoding on a coding unit basis using the input picture and the decoded picture stored in the decoded picture buffer 303, thereby generating a bitstream (also referred to as a CP bitstream).

The CP video decoder 302B includes, at least, an entropy decoder, an inverse quantizer, an inverse frequency transformer, and a predictive decoder.

The CP video decoder 302B receives a CP bitstream supplied from the CP video encoder 301B, executes entropy decoding, and then performs decoding based on the predictive encoding performed by the encoding unit to obtain a decoded picture (also referred to as a CP decoded picture). The CP video decoder 302B stores the CP decoded picture in the decoded picture buffer 303.

The decoded picture stored in the decoded picture buffer 303 is used as a reference picture.

Next, the operation of the video encoder 100 will be explained. Fig. 5 is a flowchart showing an example of the operation of the video encoder 100. Fig. 5 shows the operation of the NN video encoder 301A in the video encoder 100.

The encoder included in the NN video encoder 301A extracts features from the input picture to generate a feature vector (step S101).

As described above, the NN video encoding controller 400 imposes a constraint on the encoding process of the NN video encoder 301A. Specifically, the NN video encoding controller 400 provides the NN video encoder 301A with a predetermined maximum code amount of a picture. The NN video encoder 301A generates a low-dimensional feature vector so as not to exceed the maximum code amount.

The quantizer included in the NN video encoder 301A quantizes the feature vector to generate quantized values (step S102).

The entropy encoder included in the NN video encoder 301A entropy-encodes the quantized values to generate entropy-encoded data (step S103).

In the video encoding device 100, the multiplexer 500 outputs the entropy-encoded data as an NN bitstream (step S106).

In the configuration shown in Fig. 2, the NN video decoder 302A receives the NN bitstream from the NN video encoder 301A and executes entropy decoding. Then, the NN video decoder 302A obtains an NN decoded picture from the encoded data obtained by the entropy decoding. However, the NN video decoder 302A may be configured to receive the intermediate data (for example, the quantized value) before entropy encoding from the NN video encoder 301A and obtain an NN decoded picture from the intermediate data. In that case, the NN video decoder 302A may not execute entropy decoding processing.

In the configuration shown in Fig. 2, the CP video decoder 302B receives the CP bitstream from the CP video encoder 301B and executes entropy decoding. Then, the CP video decoder 302B obtains a CP decoded picture from the encoded data obtained by entropy decoding. However, the CP video decoder 302B may be configured to receive the intermediate data before entropy encoding (for example, the quantized value) from the CP video encoder 301B and obtain a CP decoded picture from the intermediate data. In that case, the CP video decoder 302B may not execute entropy decoding processing.

### [Description of Decoding Side]

In the NN video decoding device 200 shown in Fig. 3, the demultiplexer 600 demultiplexes the NN bitstream to obtain entropy-encoded data.

The NN video decoder 401A includes, at least, an entropy decoder, an inverse quantizer, and a decoder. The NN video decoder 401A obtains an NN decoded picture based on the encoded data obtained by demultiplexing the NN bitstream. The NN video decoder 401A stores the NN decoded picture in the decoded picture buffer 403.

The CP video decoder 401B includes, at least, an entropy decoder, an inverse quantizer, an inverse frequency transformer, and a predictive decoder.

The CP video decoder 401B obtains a CP decoded picture based on the encoded data obtained by entropy decoding the CP bitstream. The CP video decoder 401B stores the CP decoded picture in the decoded picture buffer 403.

The video decoding device 200 outputs the NN decoded picture or CP decoded picture stored in the decoded picture buffer 403 as a decoded picture at the display timing embedded in the bitstream.

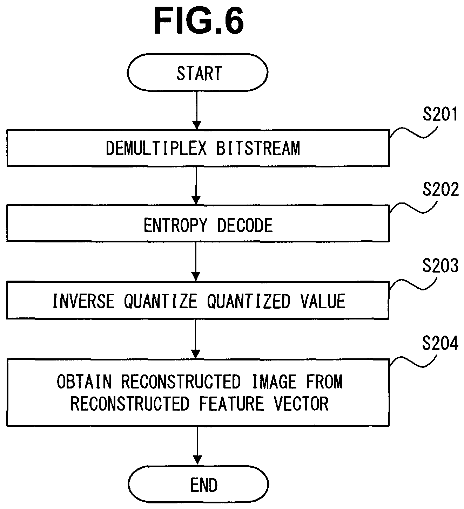

Next, the operation of the video decoding device 200 will be explained. Fig. 6 is a flowchart showing an example of the operation of the video decoding device 200. Fig. 6 shows the operation of the NN video decoder 401A in the video decoding device 200.

In the NN video decoding device 200, the demultiplexer 600 demultiplexes the bitstream (step S201). The demultiplexer 600 obtains entropy-coded data by demultiplexing.

The entropy decoder included in the NN video decoder 401A entropy-decodes the entropy-coded data to obtain quantized values (step S202).

The inverse quantizer included in the NN video decoder 401A inverse-quantizes the quantized values (step S203). The inverse quantizer obtains a reconstructed feature vector by inverse quantization.

The decoder included in the NN image decoder 401A obtains a reconstructed image of the decoded picture from the reconstructed feature vector (step S204).

### [Constraint Example 2]

In the above example embodiment, the NN video encoding controller 400 constrains the maximum code amount of the feature vectors generated by the NN video encoder 301A (this constraint is referred to as Constraint Example 1). The NN video encoding controller 400 may handle other constraints on the encoding process instead of, or in addition to, such a constraint.

For example, the NN video encoding controller 400 may specify a minimum size for the feature vectors of slice regions and control the NN video encoder 301A so that slice partitioning does not result in slices smaller than the minimum size. That is, the NN video encoding controller 400 provides a predetermined minimum size to the NN video encoding controller 400. The NN video encoding controller 400 performs slice partitioning so that the size of the slices generated by the partitioning does not fall below the minimum size.

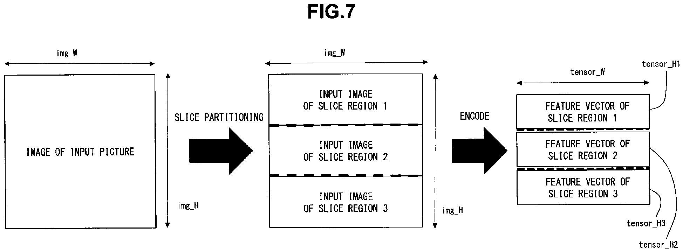

Fig. 7 is an explanatory diagram showing an example of slice partitioning.

In Fig. 7, img_W indicates the width (horizontal size) of the input picture. img_H indicates the height (vertical size) of the input picture. tensor_W indicates the row size of the feature vector. tensor_H indicates the column size of the feature vector.

It should be noted that Fig. 7 shows an example in which an input picture is equally partitioned into three slices in the vertical direction. However, this partitioning method is merely one example. The partitioning method is not limited thereto. For example, an input picture may be partitioned unequally. Furthermore, the number of slices may be 2, or 4 or more.

Furthermore, when performing slice partitioning on an input picture, the encoder included in the NN video encoder 301A extracts features from each slice obtained by the partitioning to generate a feature vector. The quantizer included in the NN video encoder 301A quantizes the feature vector for each slice to generate quantized values.

As described above, when executing video encoding based on a neural network, if a requirement for a predetermined minimum processing size (for example, 128x128) exists, and the partitioning process allows generation of slices smaller than the minimum processing size, the video decoding device may be required to execute exceptional processing. In other words, there is a possibility that interoperability between the video encoding device and the video decoding device will not be guaranteed.

However, in this example, the NN video encoding controller 400 controls the NN video encoder 301A so as not to generate slices smaller than the minimum size during slice partitioning. As a result, interoperability between the video encoding device and the video decoding device is ensured.

It should be noted that the requirement for a minimum processing size may arise, for example, when the entropy encoder included in the NN video encoder 301A uses a process to decimate quantized values while entropy-encoding the quantized values to obtain entropy-encoded data.

In Constraint Example 3, an example is shown in which the slice partitioning process is constrained (i.e., the aspect of each slice generated by the partitioning is constrained) so as not to produce slices smaller than a minimum size. However, the constraint on the slice partitioning process is not limited to this. For example, as described below, the NN video encoding controller 400 may constrain a shape of the slice partitioning (the shape of each slice generated by the partitioning) itself. It should be noted that the constraint of not generating slices smaller than the minimum size is, in a broad sense, included in the constraint on the shape of the slice partitioning.

### [Constraint Example 3]

In Constraint Example 1, the maximum code amount of a single picture is defined based on the size of the feature vector (tensor_W x tensor_H). Specifically, it is defined based on the value of (tensor_W x tensor_H) / MinCrBase. However, the NN video encoding controller 400 may use a different value of MinCrBase (hereinafter, referred to as MinCrBase') to obtain a value equivalent to (tensor_W x tensor_H) / MinCrBase. For example, the NN video encoding controller 400 may set the maximum code amount to a number of bytes proportional to the value of MinCrBase' = MinCrBase x (tensor_W x tensor_H) / (img_W x img_H).

### [Constraint Example 4]

In Constraint Example 2, the NN video encoding controller 400 constrains the minimum size of slice partitioning of a picture to be encoded by video encoding based on a neural network. Further, the NN video encoding controller 400 may impose a constraint that a shape of the slice after partitioning is not non-rectangular.

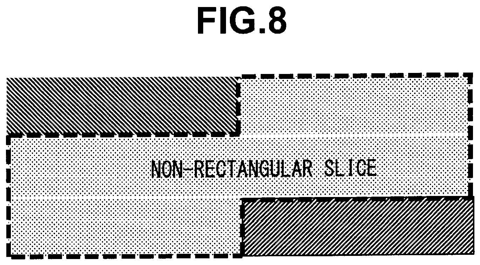

Fig. 8 is an explanatory diagram showing an example of a non-rectangular slice. In Fig. 8, the area enclosed by the dashed line corresponds to a non-rectangular slice.

For example, in H.266/VVC, there is a mode which permits use of non-rectangular slices. When a video encoding device performs encoding processing using non-rectangular slices, the video decoding device receiving a bitstream generated by the encoding process may be required to execute exceptional processing. In such a case, there is a possibility that interoperability between the video encoding device and the video decoding device will not be guaranteed.

However, by constraining use of non-rectangular slices, interoperability between the video encoding device and the video decoding device is ensured.

For example, since the use of non-rectangular slices is permitted in the aforementioned Raster-Scan Slice mode, the NN video encoding controller 400 may prohibit the use of the Raster-Scan Slice mode.

### Other Example embodiments.

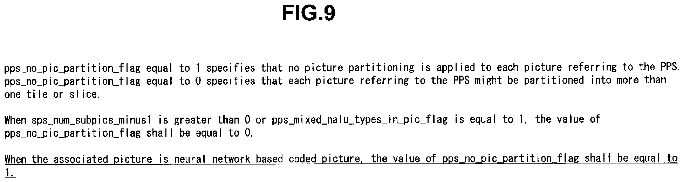

The NN video encoding controller 400 is shown in a configuration that prohibits slice partitioning of a picture encoded by video coding based on a neural network. Fig. 9 is an explanatory diagram showing an example of constraints for prohibiting slice partitioning of a picture.

In this example embodiment, the NN video encoding controller 400 controls the NN video encoder 301A, as illustrated in Fig. 2, so that it does not perform slice partitioning. This is because additional control over slice partitioning in pictures encoded by image encoding based on a neural network will be required on the video decoding device side, if slice partitioning is permitted.

In this example embodiment, the prohibition can be expressed by the constraint on the value of the pps_no_pic_partition_flag syntax in pic_parameter_set_rbsp( ) shown in Fig. 9 when VVC is used as the video encoding system for the CP video encoder 301B. It should be noted that in Fig. 9, the portion related to the prohibition of slice partitioning of a picture is underlined to make it easier to identify.

In this example embodiment, since the NN video encoder 400 eliminates slice partitioning of pictures encoded using video encoding based on a neural network, interoperability between the encoder and decoder can be ensured. It should be noted that, for pictures requiring slice partitioning, they should be processed by the CP video encoder 301B rather than the NN video encoder 301A.

### [Configuration of Encoder and Decoder]

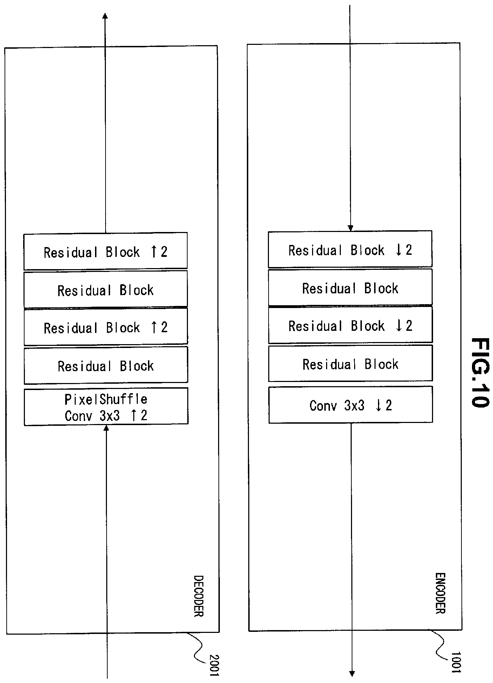

Fig. 10 is a block diagram showing a configuration example of an encoder 1001 included in NN video encoder 301A and a decoder 2001 included in NN video decoder 302A. In Fig. 10, "downward arrow (↓) 2" represents 1/2 subsamples (also referred to as pooling). "Upward arrow (↑) 2" represents 2 upsamples. Furthermore, the encoder 1001A and decoder 2001A in the second example embodiment may also be configured as illustrated in Fig. 10.

In the example shown in Fig. 10, the encoder 1001 includes four Residual Blocks and one Convolution Block. The Residual Block includes two Convolutional Blocks and one Shortcut Link. The Convolutional Block includes one Convolution layer and one activation function.

The decoder 2001 includes four Residual Blocks and one PixelShuffle convolution layer. The Pixel Shuffler is a mechanism proposed as a Sub-Pixel Convolution. The Pixel Shuffler reorders the input feature vectors and outputs high-resolution feature vectors.

As the activation function, Parametric Rectified Linear Unit (Parametric ReLU) can be used in which, in a case where an input value is less than 0, an output value is a value obtained by multiplying the input value by α (where, α is a parameter and is determined by learning), and in a case where an input value is 0 or more, an output value is the same value as the input value.

The configuration illustrated in Fig. 10 is an example, and the configurations of the encoder 1001 and the decoder 2001 are not limited to the configuration illustrated in Fig. 10.

Each of the above example embodiments can be configured by hardware, but can also be implemented by a computer program.

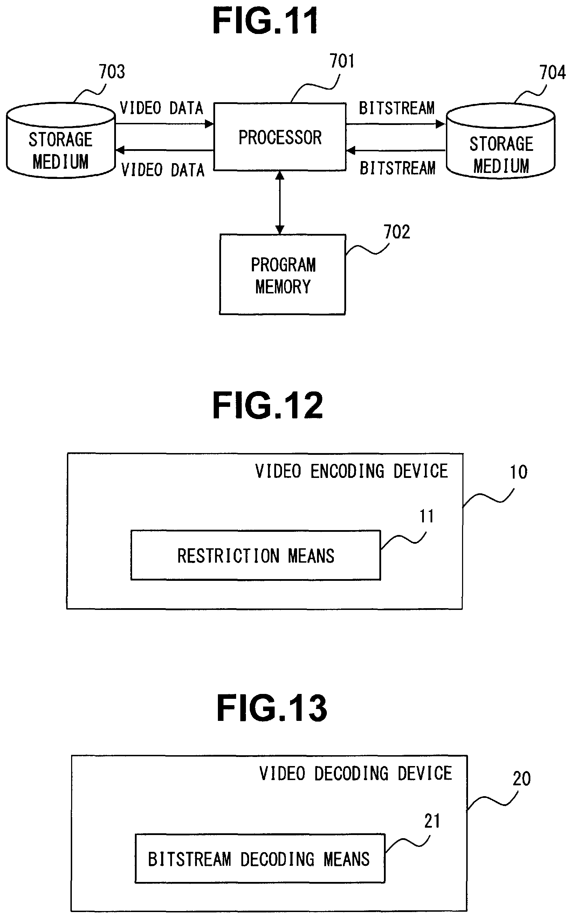

The information processing system shown in Fig. 11 comprises a processor 701 such as one or more CPUs (central processing units), a program memory 702, a storage medium 703 for storing video data, and a storage medium 704 for storing a bitstream. The storage medium 703 and the storage medium 704 may be separate storage media, or may be storage regions composed of the same storage medium. As the storage medium, a magnetic storage medium such as a hard disk can be used.

In the information processing system, a program (a video encoding program or a video decoding program) for implementing the function of each block described in each of the above example embodiments is stored in the program memory 702.

The processor 701 realizes the functions of the video encoding device 100 and the video decoding device 200 shown in the above example embodiments by executing processing in accordance with the program stored in program memory 702.

For example, the functions of the video encoding device 100 are realized by the processor 701 executing processing in accordance with the video encoding program implementing the functions of the NN video encoder 301A, the CP video encoder 301B, the NN video decoder 302A, the CP video decoder 302B, the NN video encoding controller 400, and the multiplexer 500 shown in Fig. 2.

Further, for example, the functions of the video decoding device 200 are realized by the processor 701 executing processing in accordance with a video decoding program for implementing the functions of the NN video decoder 401A, the CP video decoder 401B, and the demultiplexer 600 shown in Fig. 3.

At least the program memory 702 is a non-transitory computer readable medium. However, the program may be stored in various types of transitory computer readable media. The transitory computer-readable medium is supplied with the program via, for example, a wired communication path or a wireless communication path, that is, via an electrical signal, an optical signal, or an electromagnetic wave.

Fig. 12 is a block diagram showing the main part of a video encoding device. The video encoding device 10 shown in Fig. 12 (in this example embodiments, realized by the video encoding device 100) executes video encoding using a first video encoding method based on a neural network, and video encoding using a second video encoding method based on predictive encoding in a coding unit, and comprises constraint means (constraint unit) 11 (in this example embodiments, realized by the the NN video encoding controller 400) for imposing a constraint on an encoding process of a picture encoded by the first image encoding method.

Fig. 13 is a block diagram showing the main part of a video decoding device. The video decoding device 20 shown in Fig. 13 (in the example embodiments, realized by the video decoding device 200) executes video decoding using a first video encoding method based on a neural network, and video decoding using a second video encoding method based on predictive encoding in a coding unit, and comprises bitstream decoding means (bitstream decoding unit) 21 (in this example embodiments, realized by the demultiplexer 600) for decoding a bitstream which is generated under the condition where a constraint is imposed on an encoding process of a picture encoded by the first image encoding method.

Some or all of the above example embodiments may be described as follows, but are not limited thereto.

(Supplementary note 1) A video encoding device which executes video encoding using a first video encoding method based on a neural network, and video encoding using a second video encoding method based on predictive encoding in a coding unit, comprising,
constraint means for imposing a constraint on an encoding process of a picture encoded by the first image encoding method.

(Supplementary note 2) The video encoding device according to Supplementary note 1, wherein
the constraint means constrains a maximum code amount of a picture video-encoded by the first video encoding method based on a dimension of a feature vector.

(Supplementary note 3) The video encoding device according to Supplementary note 1 or 2, wherein
the constraint means constrains a shape of slice partitioning of a picture video-encoded by the first video encoding method.

(Supplementary note 4) A video decoding device which executes video decoding using a first video encoding method based on a neural network, and video decoding using a second video encoding method based on predictive encoding in a coding unit, comprising,
bitstream decoding means for decoding a bitstream which is generated under the condition where a constraint is imposed on an encoding process of a picture encoded by the first image encoding method.

(Supplementary note 5) The video decoding device according to Supplementary note 4, wherein
the constraint is a constraint regarding a maximum code amount of a picture video-encoded by the first video encoding method based on a dimension of a feature vector.

(Supplementary note 6) The video decoding device according to Supplementary note 4 or 5, wherein
the constraint is a constraint regarding a shape of slice partitioning of a picture video-encoded by the first video encoding method.

(Supplementary note 7) A video encoding method which executes video encoding using a first video encoding method based on a neural network, and video encoding using a second video encoding method based on predictive encoding in a coding unit, comprising,
imposing a constraint on an encoding process of a picture encoded by the first image encoding method.

(Supplementary note 8) A video decoding method which executes video decoding using a first video encoding method based on a neural network, and video decoding using a second video encoding method based on predictive encoding in a coding unit, comprising,
decoding a bitstream which is generated under the condition where a constraint is imposed on an encoding process of a picture encoded by the first image encoding method.

(Supplementary note 9) A video encoding program for causing a computer to execute video encoding using a first video encoding method based on a neural network, and video encoding using a second video encoding method based on predictive encoding in a coding unit, wherein
the video encoding program causes the computer to execute imposing a constraint on an encoding process of a picture encoded by the first image encoding method.

(Supplementary note 10) A video decoding program for causing a computer to execute video decoding using a first video encoding method based on a neural network, and video decoding using a second video encoding method based on predictive encoding in a coding unit, wherein
the video decoding program causes the computer to execute decoding a bitstream which is generated under the condition where a constraint is imposed on an encoding process of a picture encoded by the first image encoding method.

(Supplementary note 11) The video encoding method according to Supplementary note 7, wherein
a maximum code amount of a picture video-encoded by the first video encoding method is constrained based on a dimension of a feature vector.

(Supplementary note 12) The video encoding method according to Supplementary note 7 or 11, wherein a shape of slice partitioning of a picture video-encoded by the first video encoding method is constrained.

(Supplementary note 13) The video decoding method according to Supplementary note 8, wherein
the constraint is a constraint regarding a maximum code amount of a picture video-encoded by the first video encoding method based on a dimension of a feature vector.

(Supplementary note 14) The video decoding method according to Supplementary note 8 or 13, wherein
the constraint is a constraint regarding a shape of slice partitioning of a picture video-encoded by the first video encoding method.

Some or all of the configurations described in Supplementary notes 2 to 3, which directly or indirectly depend on the aforementioned Supplementary note 1, may be made dependent on various hardware, software, various recording means for recording software, or systems, provided that this does not deviate from the aforementioned example embodiments. Furthermore, some or all of the configurations described in Supplementary notes 5 to 6, which directly or indirectly depend on the aforementioned Supplementary note 4, may be made dependent on various hardware, software, various recording media for recording software, or systems, provided that this does not deviate from the aforementioned example embodiments.

Although the invention of the present application has been described above with reference to example embodiments and examples, the present invention is not limited to the above example embodiments and examples. Various changes can be made to the configuration and details of the present invention that can be understood by those skilled in the art within the scope of the present invention.

This application is based upon and claims the benefit of priority from Japanese patent application No. 2024-000581 filed on January 5, 2024 and Japanese patent application No. 2024-035448 filed on March 8, 2024, the disclosures of which are incorporated herein in their entirety by reference.

### Reference Signs List

- 10: Video encoding device
- 11: Constraint means
- 20: Video decoding device
- 21: Bitstream decoding means
- 100: Video encoding device
- 200: Video decoding device
- 300: Switch
- 301A: NN video encoder
- 301B: CP video encoder
- 302A: NN video decoder
- 302B: CP dideo decoder
- 303: decoded picture buffer
- 400: NN video encoding controller
- 401A: NN video decoder
- 401B: CP video decoder
- 403: Decoded picture buffer
- 500: Multiplexer
- 600: Demultiplexer
- 701: Processor
- 702: Program memory
- 703, 704: Storage media
- 1001: Encoder
- 2001: Decoder

## Claims

1. A video encoding device which executes video encoding using a first video encoding method based on a neural network, and video encoding using a second video encoding method based on predictive encoding in a coding unit, comprising,
constraint means for imposing a constraint on an encoding process of a picture encoded by the first image encoding method.

2. The video encoding device according to claim 1, wherein
the constraint means constrains a maximum code amount of a picture video-encoded by the first video encoding method based on a dimension of a feature vector.

3. The video encoding device according to claim 1 or 2, wherein
the constraint means constrains a shape of slice partitioning of a picture video-encoded by the first video encoding method.

4. A video decoding device which executes video decoding using a first video encoding method based on a neural network, and video decoding using a second video encoding method based on predictive encoding in a coding unit, comprising,
bitstream decoding means for decoding a bitstream which is generated under the condition where a constraint is imposed on an encoding process of a picture encoded by the first image encoding method.

5. The video decoding device according to claim 4, wherein
the constraint is a constraint regarding a maximum code amount of a picture video-encoded by the first video encoding method based on a dimension of a feature vector.

6. The video decoding device according to claim 4 or 5, wherein
the constraint is a constraint regarding a shape of slice partitioning of a picture video-encoded by the first video encoding method.

7. A video encoding method which executes video encoding using a first video encoding method based on a neural network, and video encoding using a second video encoding method based on predictive encoding in a coding unit, comprising,
imposing a constraint on an encoding process of a picture encoded by the first image encoding method.

8. A video decoding method which executes video decoding using a first video encoding method based on a neural network, and video decoding using a second video encoding method based on predictive encoding in a coding unit, comprising,
decoding a bitstream which is generated under the condition where a constraint is imposed on an encoding process of a picture encoded by the first image encoding method.

9. A video encoding program for causing a computer to execute video encoding using a first video encoding method based on a neural network, and video encoding using a second video encoding method based on predictive encoding in a coding unit, wherein
the video encoding program causes the computer to execute imposing a constraint on an encoding process of a picture encoded by the first image encoding method.

10. A video decoding program for causing a computer to execute video decoding using a first video encoding method based on a neural network, and video decoding using a second video encoding method based on predictive encoding in a coding unit, wherein
the video decoding program causes the computer to execute decoding a bitstream which is generated under the condition where a constraint is imposed on an encoding process of a picture encoded by the first image encoding method.
